# EUROPÄISCHE PATENTANMELDUNG

(11) **EP 2 465 345 A2**
(43) Veröffentlichungstag der Anmeldung: **20.06.2012**
(21) Anmeldenummer: 11009844.9
(22) Anmeldetag: 14.12.2011
(51) Int. Cl.: A01K 23/00

(54) **Auffangvorrichtung für tierische Exkremente**

(30) Priorität: 15.12.2010 AT 20702010
(71) Anmelder: Hauser, Martin, 6213 Pertisau (AT)
(72) Erfinder: Hauser, Martin, 6213 Pertisau (AT)
(74) Vertreter: Gangl, Markus

(57) **Zusammenfassung**

Auffangvorrichtung (1) für tierische Exkremente zur Verwendung bei einem Fuhrwerk, wobei das Fuhrwerk ein Zugtier (6) mit einem Schweif (7) und einem vom Zugtier (6) bewegten Wagen (8) oder Schlitten aufweist und wobei die Auffangvorrichtung (1) ein am Schweif (7) zu befestigendes Betätigungselement (3) aufweist, mittels welchem durch ein Anheben des Schweifes (7) während des Kotens bzw. Urinierens das Innere der Auffangvorrichtung (1) für die Exkremente zugänglich machbar ist, wobei die Auffangvorrichtung (1) eine erste Befestigungseinrichtung und eine zweite Befestigungseinrichtung aufweist, wobei die Auffangvorrichtung (1) mit der ersten Befestigungseinrichtung am Zugtier (6) und mit der zweiten Befestigungseinrichtung am Wagen (8) oder Schlitten befestigbar ist.

## Beschreibung

Die Erfindung betrifft eine Auffangvorrichtung für tierische Exkremente zur Verwendung bei einem Fuhrwerk, wobei das Fuhrwerk ein Zugtier mit einem Schweif und einem vom Zugtier bewegten Wagen oder Schlitten aufweist und wobei die Auffangvorrichtung ein am Schweif zu befestigendes Betätigungselement aufweist, mittels welchem durch ein Anheben des Schweifes während des Kotens bzw. Urinierens das Innere der Auffangvorrichtung für die Exkremente zugänglich machbar ist.

Bei Fuhrwerken, beispielsweise Kutschen, ist die Umweltbelastung durch tierische Exkremente, insbesondere wenn die Fuhrwerke in der Stadt, beispielsweise in Form eines Fiakers bewegt werden, ein großes Ärgernis. Aus diesem Grund wurden sogenannte "Pferdewindeln" entwickelt, bei denen ein Auffangbehälter sowohl am Pferd als auch an der vom Pferd gezogenen Kutsche befestigt ist, wie dies beispielsweise in der DE 200 11 871 U1 gezeigt ist. Derartige Vorrichtungen haben den Vorteil, dass das Gewicht der Exkremente sowohl vom Pferd als auch von der Kutsche getragen wird. Nachteilig ist jedoch, dass entweder die Exkremente offen im Auffangbehälter liegen, wodurch zwar eine Straßenverschmutzung nicht aber die Geruchsproblematik vermieden wird oder es ist ein mühsames manuelles Verschließen nach dem Koten des Pferdes nötig. Dies hat den weiteren Nachteil, dass der Auffangbehälter rechtzeitig vor dem nächsten Kotvorgang wieder geöffnet werden muss.

Die US 718,915 A und die DE 13 365 C haben sich die Eigenschaft, dass Zugtiere zum Koten ihren Schweif anheben (weibliche Zugtiere auch während des Urinierens) zunutze gemacht und einen Kotsack offenbart, dessen Öffnung durch ein Anheben des Schweifes betätigbar ist. Der Nachteil derartiger Vorrichtungen ist die beschränkte Größe des Kotsacks und die Belastung des Zugtieres durch den befüllten Kotsack, was zur Folge hat, dass ein Pferd einen derartigen Kotsack unter Umständen nicht akzeptiert. Ein Kotsack, der nur am Pferd hängt, beginnt im Trab bzw. Galopp extrem zu schaukeln. Sollte das Pferd scheuen, würde sich dies durch den am Pferd hängenden Kotsack weiter verschlechtern.

Die GB 190 900 170 A zeigt einen sackförmigen Auffangbehälter für Exkremente, der sowohl am Fuhrwerk als auch am Zugtier befestigt wird. Die Öffnung der Auffangvorrichtung ist ständig offen, um sicherzustellen, dass die Exkremente tatsächlich in den Auffangbehälter gelangen. Um Irritationen des Zugtiers zu vermeiden, ist die Auffangvorrichtung nur an möglichst wenigen Stellen mit dem Zugtier verbunden.

Die GB 134 024 A zeigt eine Auffangvorrichtung, bei der die Exkremente auf einer Rutsche platziert und über die Rutsche in ein an der Kutsche befestigtes Behältnis befördert werden.

Aufgabe der Erfindung ist es, obige Nachteile zu vermeiden und einen Kotsack zur Verfügung zu stellen, der die eingangs erwähnte Umweltproblematik löst und gleichzeitig von den jeweiligen Zugtieren zur Benutzung akzeptiert wird.

Dies wird durch eine Auffangvorrichtung mit den Merkmalen des Anspruchs 1 gelöst. Allgemein ist die erfindungsgemäße Auffangvorrichtung für tierische Exkremente bei einem Fuhrwerk verwendbar, wobei das Fuhrwerk einen Wagen oder Schlitten aufweist, der von einem Zugtier, welches einen Schweif aufweist, bewegt wird. Das Zugtier kann ein Pferd, ein Esel, ein Maultier oder Ähnliches sein, welches eine Kutsche, beispielsweise einen Ein- oder Mehrspänner oder einen Schlitten zieht. Die Erfindung ist aber auch für andere Zugtiere und andere Wagen oder Schlitten benutzbar, insbesondere können auch mehrere Zugtiere am Fuhrwerk vorgesehen sein, die jeweils eine eigene Auffangvorrichtung verwenden.

Die Erfindung macht sich die Eigenschaft des Zugtieres, während des Kotens bzw für ein weibliches Tier auch während des Urinierens den Schweif zu heben zunutze und sieht ein am Schweif zu befestigendes Betätigungselement vor, mittels welchem durch ein Anheben des Schweifes das Innere der Auffangvorrichtung für die Exkremente zugänglich machbar ist. Mit anderen Worten, wird der Schweif gehoben, wird durch das Betätigungselement eine in der Auffangvorrichtung vorhandene Öffnung vergrößert oder eine Öffnung geschaffen, in die die Exkremente, beispielsweise Pferdeäpfel, während des Kotens aufgrund der Anordnung der Auffangvorrichtung automatisch hineinfallen. Die Öffnung, mittels der das Innere der Auffangvorrichtung zugänglich gemacht wird, muss dabei in der Nähe des Afters des Zugtieres angeordnet sein. Weibliche Zugtiere können neben Kot auch Urin in die Auffangvorrichtung ablassen.

Erfindungsgemäß weist die Auffangvorrichtung eine erste und eine zweite Befestigungseinrichtung auf, wobei die erste Befestigungseinrichtung eine mittelbare oder unmittelbare Befestigung der Auffangvorrichtung am Zugtier ermöglicht und die zweite Befestigungseinrichtung eine Befestigung am Wagen oder Schlitten. Durch die gemeinsame Befestigung der Auffangvorrichtung am Pferd und am Wagen oder Schlitten kann das Gewicht der mit Exkrementen befüllten Auffangvorrichtung sowohl vom Zugtier als auch vom Wagen oder Schlitten gemeinsam getragen werden, sodass sich die Belastung für das Zugtier verringt und dieses die Auffangvorrichtung leichter akzeptiert. Durch die gemeinsame Befestigung am Zugtier und am Wagen oder Schlitten und die dadurch hergestellte Verbindung ergibt sich eine geringere Eigendynamik der Auffangvorrichtung, insbesondere für den Fall, dass die Auffangvorrichtung eine Schlauchform aufweist oder einen schlauchförmigen Auffangsack umfasst. Aufgrund der geometrischen Anordnung kann es vorgesehen sein, dass der Schwerpunkt der mit Exkrementen befüllten Auffangvorrichtung in der Nähe des Wagens oder Schlittens angesiedelt ist, wodurch das Zugtier lediglich den kleineren Anteil am zu tragenden Gewicht aufbringen muss.

Weitere vorteilhafte Ausführungen der Erfindung sind in den abhängigen Ansprüchen definiert.

In einer bevorzugten Ausführungsform der Erfindung ist das Betätigungselement als ein um den Schweif anzuordnendes, beispielsweise zu bindendes Band ausgebildet, welches elastisch sein kann. Ein derartiges Band ist in einfacher Weise am Schweif befestigbar und hält dort, ohne das Zugtier allzu sehr zu stören. Das Betätigungselement kann darüber hinaus ein Verbindungselement aufweisen, mit dem das Betätigungselement die durch das Heben des Schweifes eingeleitete Bewegung auf die Auffangvorrichtung überträgt. Das Verbindungselement kann wiederum als vorzugsweise elastisches Band ausgebildet sein.

In einer bevorzugten Ausführungsform der Erfindung verfügt die erste Befestigungseinrichtung über ein Befestigungsmittel, das mit einem Geschirr verbindbar ist, mit dem die Auffangvorrichtung vorzugsweise am Hinterteil des Zugtieres befestigbar ist. Dabei können Geschirre zum Zug kommen, die an sich im Stand der Technik bekannt sind. Statt eines Geschirrs kann aber auch eine Mehrzahl von Riemen vorgesehen sein, die über das Befestigungsmittel mit der ersten Befestigungseinrichtung und damit der Auffangvorrichtung verbindbar sind. Die erste Befestigungseinrichtung kann selbst als das Befestigungsmittel ausgebildet sein. Es kann aber auch vorgesehen sein, das Geschirr bzw. das Riemensystem als Teil der ersten Befestigungseinrichtung und damit der Auffangvorrichtung auszubilden, sodass diese unmittelbar am Zugtier befestigbar ist.

In einer weiteren Ausführungsform der Erfindung weist die zweite Befestigungsvorrichtung einen Halteteil auf, der an einem am Wagen oder Schlitten montierten Tragteil befestigbar ist, sodass die Auffangvorrichtung mittels der zweiten Befestigungseinrichtung dort befestigt werden kann. Halte- und Tragteil müssen dabei derart ausgebildet sein, dass vom Wagen oder Schlitten zumindest ein Teil des Gewichts der mit Exkrementen befüllten Auffangvorrichtung gehalten werden kann. Es kann aber auch vorgesehen sein, das Tragteil als Bestandteil der zweiten Befestigungseinrichtung und damit der Auffangvorrichtung auszubilden, sodass diese unmittelbar am Wagen oder Schlitten befestigbar ist.

Der Halte- und der Tragteil können dabei insbesondere derart ausgebildet sein, dass im befestigten Zustand eine formschlüssige Verbindung zwischen Halte- und Tragteil herrscht. Beispielsweise können am Tragteil oder am Halteteil Anschlagflächen ausgebildet sein, in die der jeweils andere Teil eingeschoben werden kann und dadurch formschlüssig hält.

In einer weiteren Ausführungsform umfasst der Halteteil wenigstens einen Karabinerhaken, wodurch eine besonders einfache zweite Befestigungseinrichtung gegeben ist.

In einer bevorzugten Ausführungsform der Erfindung weist die Auffangvorrichtung einen Auffangsack auf, wobei der Auffangsack eine Öffnung umfasst, die im Montagezustand am Fuhrwerk dem Hinterteil des Zugtiers zugewandt ist. Der Auffangsack kann dabei derart ausgebildet sein, dass bei gesenktem Schweif die Öffnung möglichst klein ist. Durch das Heben des Schweifes wird dann die Öffnung über das Betätigungselement so vergrößert, dass Exkremente, wie beispielsweise Pferdeapfel hineinfallen können und damit in das Innere des Auffangsackes gelangen. Dadurch wird das Innere der Auffangvorrichtung durch das Heben des Schweres zugänglich gemacht. Um für verschiedene Fuhrwerke verwendet zu werden, kann es vorgesehen sein, dass der Auffangsack aus einem flexiblen und zusätzlich oder alternativ einem elastischen Material hergestellt ist. Dadurch ist es auch möglich, den Verformungen, wie sie im Fahrbetrieb des Fuhrwerks oder durch die befüllten Exkremente auftreten, Rechnung zu tragen. Der Auffangsack kann dabei beispielsweise aus einem Kunststoff wie z.B. Gummi, insbesondere aus einer Kunststofffolie hergestellt sein und eine ausreichende Dicke aufweisen, sodass bis auf die Öffnung eine hermetische Abriegelung insbesondere der Gerüche ermöglicht ist.

In einer Ausführungsform ist der Auffangsack derart ausgebildet, dass sich im Montagezustand der Auffangvorrichtung, wobei der Auffangsack zumindest teilweise mit Exkrementen befüllt ist, eine erste Faltung zwischen dem Zugtier und dem mit Exkrementen befüllten Bereich des Auffangsacks bildet. Dieser mit Exkrementen befüllte Bereich kann z.B. ein mittlerer Bereich des Auffangsacks sein. Durch die geworfene Falte im Auffangsack, die sich zwischen dem mit Exkrementen befüllten Bereich und der dem Hinterteil des Zugtiers zugeordneten Öffnung befindet, ist eine weitere Abriegelung gegen Gerüche, die von den Exkrementen verursacht werden, gegeben.

Es kann auch vorgesehen sein, dass der Auffangsack derart ausgebildet ist, dass sich eine zweite Falte zwischen dem Wagen oder Schlitten und dem mit Exkrementen befüllten Bereich des Auffangsacks im Auffangsack bildet. Weist der Auffangsack eine zweite dem Wagen oder Schlitten zugewandte Öffnung auf, ist eine Abriegelung gegen aus dem Auffangsack austretende Gerüche auch auf dieser Seite des Auffangsacks möglich.

In einer weiteren Ausführungsform weist die Auffangvorrichtung, vorzugsweise der Auffangsack einen aus einem flexiblen Material bestehenden Lappen auf, der mit dem Betätigungselement verbunden ist, wobei der Lappen in gesenktem Zustand des Schweifes eine Öffnung in der Auffangvorrichtung, beispielsweise die Öffnung im Auffangsack zumindest zu einem Teil vorzugsweise im Wesentlichen verschließt. Der Lappen kann im Auffangsack eingearbeitet und beispielsweise aus einem flexibleren Material als der Auffangsack hergestellt sein und/oder größere Ausmaße als die Lücke im Auffangsack für den Lappen aufweisen und im gesenkten Zustand derartige Falten werfen, dass die Öffnung für die Exkremente im Auffangsack zumindest teilweise verschlossen wird. Zusätzlich oder alternativ kann das Material dieses Lappens auch elastisch sein. Durch ein Heben des Schweifes zieht das Betätigungselement am Lappen, wodurch dieser die Öffnung freigibt und das Innere der Auffangvorrichtung, vorzugsweise des Auffangsackes, für die Exkremente zugänglich macht.

Der Auffangsack kann eine weitere Öffnung umfassen, die im Montagezustand dem Wagen oder Schlitten zugewandt ist. Diese weitere Öffnung kann beispielsweise durch die zweite Befestigungseinrichtung im Betriebszustand verschlossen sein. Es kann auch vorgesehen sein, dass der Auffangsack derart montiert wird, dass die weitere Öffnung durch Elemente des Wagens oder Schlittens im Montagezustand verschlossen wird. Durch diese weitere Öffnung kann ein Entleeren des Auffangsackes beispielsweise während einer längeren Kutschfahrt problemlos und sicher gewährleistet sein, indem die zweite Befestigungseinrichtung gelöst wird, d.h. die Verbindung zwischen Auffangvorrichtung und Wagen oder Schlitten getrennt wird, während die Befestigung am Zugtier selbst, die häufig umständlicher herzustellen ist, erhalten bleiben kann. Die in der Auffangvorrichtung gesammelten Exkremente können über die weitere Öffnung schließlich in dafür vorgesehene Behälter entleert werden. Es kann aber auch vorgesehen sein, dass der Auffangsack nur die eine Öffnung aufweist, die dem Hinterteil des Zugtiers zur Aufnahme der Exkremente im Montagezustand zuzuwenden ist.

Die Auffangvorrichtung kann weiters einen Anschluss zum Anschließen eines Wasserschlauchs aufweisen, wodurch das Innere des Auffangsacks in einfacher Weise gereinigt werden kann.

Die Erfindung betrifft weiters ein Fuhrwerk mit einem Zugtier, welches einen Schweif aufweist, und einem vom Zugtier bewegten Wagen oder Schlitten und einer wie oben beschriebenen Auffangvorrichtung.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine schematische Ansicht einer Auffangvorrichtung mit einem Auffangsack,
- Fig.2: eine schematische Darstellung einer ersten Befestigungseinrichtung, die mit einer Mehrzahl von Riemen verbindbar ist,
- Fig. 3a bis 3c: verschiedene Ansichten einer schematischen Darstellung einer Auffangvorrichtung sowie eines Details davon,
- Fig. 4a und 4b: schematische Funktionsdarstellungen der Auffangvorrichtung und
- Fig. 5a und 5b: Ansichten einer bei einem Fuhrwerk verwendeten erfindungsgemäßen Auffangvorrichtung.

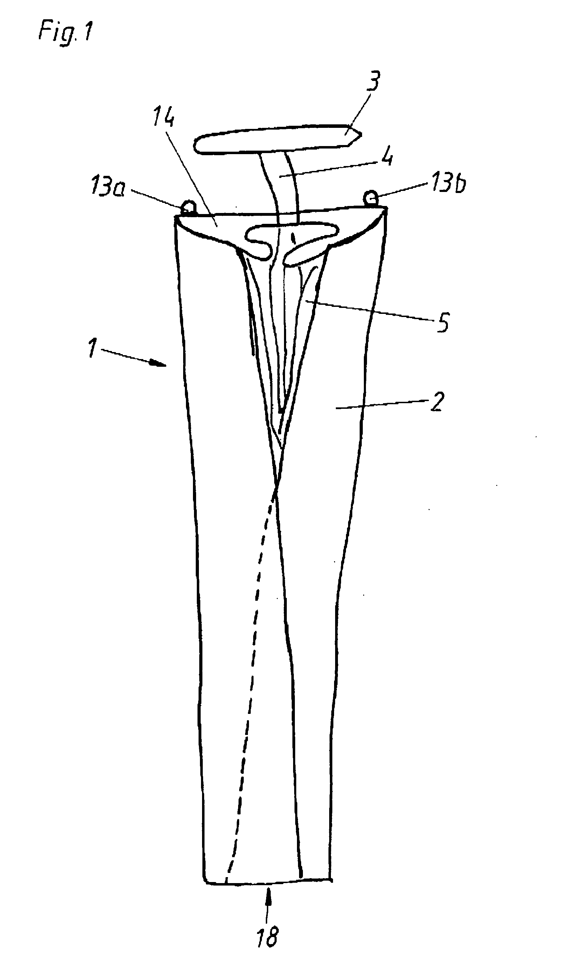

Fig. 1 zeigt eine schematische Darstellung einer Auffangvorrichtung 1 mit einem Auffangsack 2, der aus einer kunststoffhältigen Folie, die eine Stärke von etwa 1 mm aufweist hergestellt ist. Insbesondere um ästhetische Bedürfnisse zu erfüllen, kann der Auffangsack auch aus Leder hergestellt sein. Im Montagezustand der Auffangvorrichtung 1 ist eine Öffnung 14 im Auffangsack 2 dem Hinterteil des Zugtieres 6 zugewandt. Im Bereich der Öffnung 14 ist ein Lappen 5, der beispielsweise auch aus Kunststoff oder Leder hergestellt sein kann, eingearbeitet, z.B. eingenäht oder eingeklebt. Mit dem Lappen 5 ist ein Verbindungselement 4 verbunden, das als elastisches Band ausgebildet sein kann. Das Verbindungselement 4 kann zu diesem Zweck z.B, am Lappen 5 angenäht sein. Am anderen Ende des Verbindungselementes 4 ist ein Betätigungselement 3 angeordnet, das in diesem Fall als Lederband ausgebildet ist und um den Schweif 7 des Zugtieres 6 gebunden werden kann. Die Verschlussvorrichtung des Lederbandes ist in dieser Figur nicht dargestellt.

Im ausgebreiteten Zustand ist der Lappen 5 dreiecksförmig, wobei die Ausmaße des Lappens 5 größer als die im ausgebreiteten Zustand des Auffangsacks 2 ebenfalls dreiecksförmige Lücke sind, in die der Lappen 5 eingearbeitet, z.B. eingenäht wird. Im gesenkten Zustand des Schweifes 7 wirft der Lappen 5 dadurch Falten, sodass die Öffnung 14 zumindest zu einem Teil verschlossen wird, um die Geruchsbelästigung durch im Auffangsack 2 befindliche Exkremente zu verringern.

Beim Heben des Schweifes 7 um zu Koten, zieht der Schweif 7 samt Betätigungselement 3 am Verbindungselement 4, wodurch der Lappen 5 nach außen kippt und so das Innere des Auffangsackes 2 für den Kot und gegebenenfalls auch den Urin weiblicher Zugtiere 6 zugänglich macht. Die strichlierte Linie im von der Öffnung 14 abgewandten Teil des Auffangsackes 2 stellt dar, dass der Auffangsack 2 in von der Öffnung 14 abgewandter Richtung konisch verklebt oder vernäht wird, sodass die Lücke zur Einarbeitung des Lappens 5 zur Verfügung gestellt wird. Eine weitere Öffnung 18 des Auffangsacks 2 wird im Betriebszustand dem Wagen 8 oder Schlitten zugewandt und dient zur Entleerung des Auffangsacks 2. Karabinerhaken 13a, 13b dienen zur Befestigung am Zugtier 6. Statt Karabinerhaken können andere einfache, im Stand der Technik bekannte Befestigungselemente wie z.B. Ringelemente verwendet werden. Aus Gründen der Übersichtlichkeit sind keine Elemente der zweiten Befestigungseinrichtung dargestellt. Diese Befestigungselemente können ebenso wie die Karabinerhaken 13a, 13b auf einem Lederlappen angeordnet sein, wobei dieser Lappen im Montagezustand der Auffangvorrichtung 1 am Zugtier 6 anliegt, da derartige Lappen für das Zugtier 6 angenehm zu tragen sind. In diesem Fall ist der Auffangsack 2 an einem derartigen Lappen befestigt.

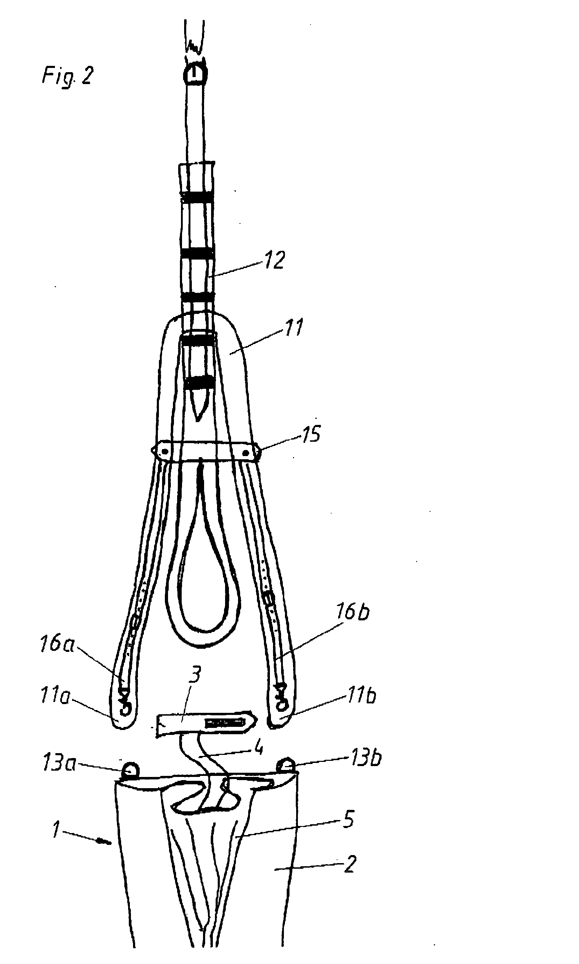

Fig. 2 zeigt den dem Hinterteil des Zugtieres 6 zugewandten Bereich des Auffangsackes 2, der als Befestigungsmittel der ersten Befestigungseinrichtung zwei Karabinerhaken 13a, 13b aufweist, mit denen die Auffangvorrichtung 1 mit einer Mehrzahl von Riemen 11, 12 verbindbar ist, wobei die Riemen 11, 12 ihrerseits am Zugtier 6 befestigt sind. Die konkreten Details der Karabinerhaklen 13a, 13b und des jeweiligen Gegenstücks sind aus Gründen der Übersichtlichkeit nicht näher dargestellt.

Das am Zugtier 6 befestigte System von Riemen 11, 12 dient zur Verbindung mit der ersten Befestigungseinrichtung und damit der Befestigung der Auffangvorrichtung 1 am Zugtier 6. Das Riemensystem weist u. a. einen Traggurt 11 auf, der beispielsweise aus einem Stück gefertigt und ca. 4 cm breit sein kann. Der Traggurt 11 läuft im Falle eines Pferdes über die Kruppe des Pferdes seitlich eines Schweifriemens 12 bis in Höhe des Auffangsacks 2.

Im Bereich der zwei Enden 11a, 11b des Traggurts 11 ist jeweils eine Strupfe 16a, 16b aufgenäht, die ein passgenaues Einstellen auf verschiedene Zugtiere 6, insbesondere verschiedene Pferde ermöglicht. Ein Band 15 beispielsweise aus Leder dient zur Verbindung von zwei Bereichen des Traggurtes 11 und verhindert das seitliche Abrutschen, wie dies im Falle von sehr schmalen Pferden über die Kruppe erfolgen kann.

Ein Schweifriemen 12 dient zur Verbindung des Traggurts 11 mit weiteren, hier nicht näher dargestellten Riemen, die an sich im Stand der Technik bekannt sind. Dabei kann die Verbindung je nach Größe des Zugtieres in unterschiedlichen Abständen am Schweifriemen 12 erfolgen.

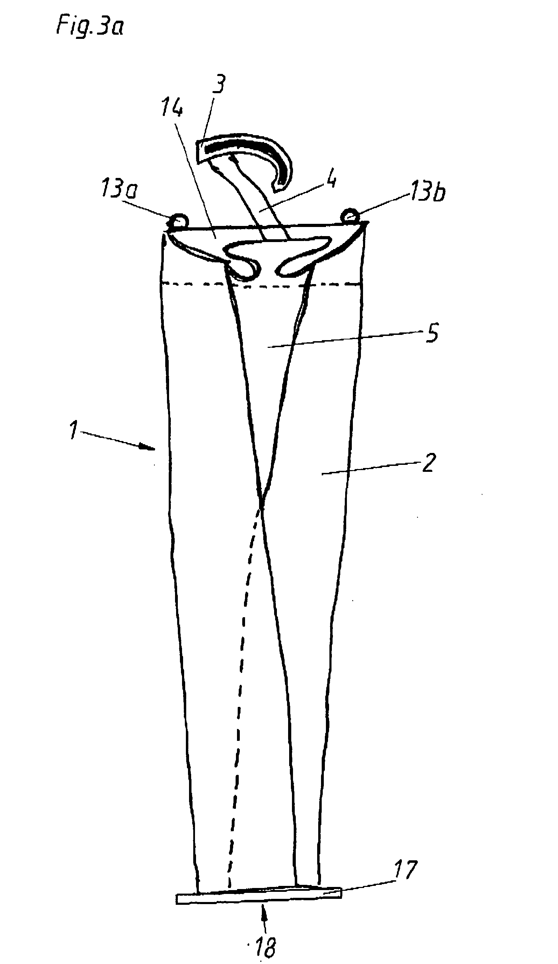

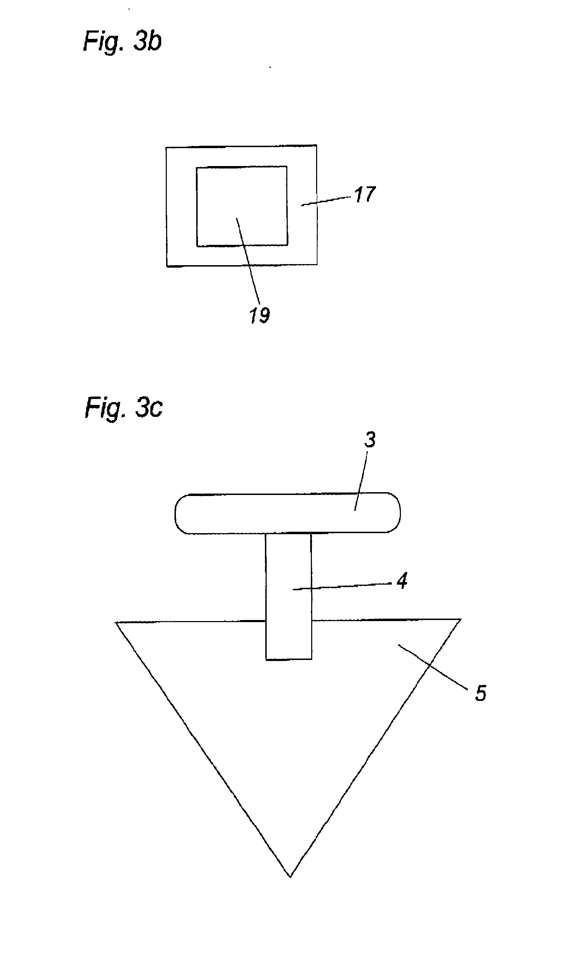

Fig. 3a zeigt eine schematische Ansicht der Auffangvorrichtung 1. Jenes Endes des Auffangsackes 2, das dem Wagen 8 oder Schlitten zugewandt ist, ist mit einer Halteplatte 17 verbunden, die Teil der zweiten Befestigungseinrichtung ist. Diese Halteplatte 17, die in einer Draufsicht in Fig. 3b dargestellt ist, ist mit einem Tragteil am Wagen oder Schlitten verbindbar, wodurch die Auffangvorrichtung 1 am Wagen 8 oder Schlitten befestigt wird. Zu diesem Zweck kann die Halteplatte 17 mit dem Tragteil verschraubt oder in dafür vorgesehene Anschlagflächen des Tragteils eingeschoben werden. Es kann auch vorgesehen sein, dass statt der Halteplatte 17 oder an der Halteplatte 17 Karabiner oder karabinerähnliche Halterungen vorgesehen sind, die mit entsprechenden Gegenstücken am Wagen 8 oder Schlitten verbunden werden. Der Auffangsack 2 weist eine weitere Öffnung 18 auf, wobei der Auffangsack 2 derart an der Halteplatte 17, die ein Durchgangsloch 19 aufweist, montiert ist, dass über das Durchgangsloch 19 die weitere Öffnung 18 zugänglich ist. Die Halteplatte 17 wird derart mit dem Wagen 8 oder Schlitten verbunden, dass das Durchgangsloch 19 und damit die weitere Öffnung 18 durch Bauteile vom Wagen 8 oder Schlitten geschlossen sind.

Durch Entfernen der Halteplatte 17 vom Wagen 8 oder Schlitten können Exkremente, die sich im Auffangsack 2 befinden, über die weitere Öffnung 18 bequem entleert werden, ohne gleichzeitig den Auffangsack 2 vom Zugtier 6 zu trennen.

Fig. 3c zeigt den Lappen 5 samt Verbindungselement 4 und Betätigungselement 3. Das Verbindungselement 4 kann als elastisches Band ausgebildet sein, welches z. B. etwa 4cm breit ist. Die Schenkel des im ausgebreiteten Zustand dreiecksförmigen Lappens 5 können beispielsweise 50 cm lang sein.

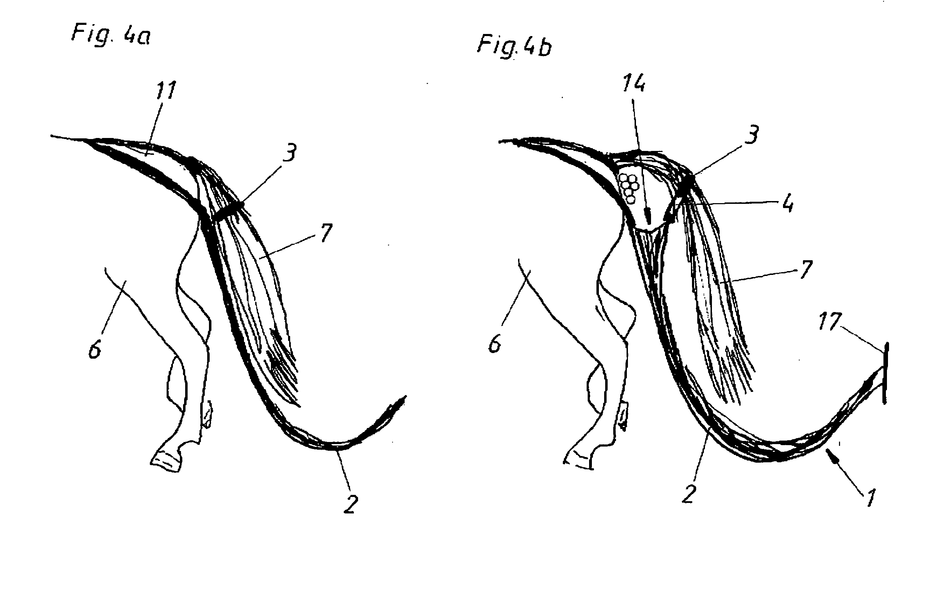

Fig. 4a zeigt eine Funktionsdarstellung jenes Teils der Auffangvorrichtung 1, der an einem Pferd befestigt ist, wobei der Schweif 7 des Pferdes gesenkt ist. Der Auffangsack 2 ist schmal ausgeführt und stört daher wenig das Erscheinungsbild des Fuhrwerks. Durch den gesenkten Schweif 7 wird die Öffnung 14 mittels der gefalteten Bereiche des Lappens 5 zum Großteil verschlossen, sodass die Geruchsbelästigung ausgehend von im Auffangsack 2 befindlichen Exkrementen verringert wird.

In Fig. 4b ist die Funktion der Auffangvorrichtung 1 während des Kotens des Zugtieres 6 dargestellt. Das Zugtier 6 hebt den Schweif 7, wodurch der Lappen 5 nach außen kippt und so das Innere des Auffangsackes 2 zugänglich macht. Beispielsweise wird eine ca. 30 cm breite und 20 cm tiefe Öffnung durch den Lappen 5 zugänglich gemacht, indem die Exkremente, beispielsweise die Pferdeäpfel im Allgemeinen Platz finden.

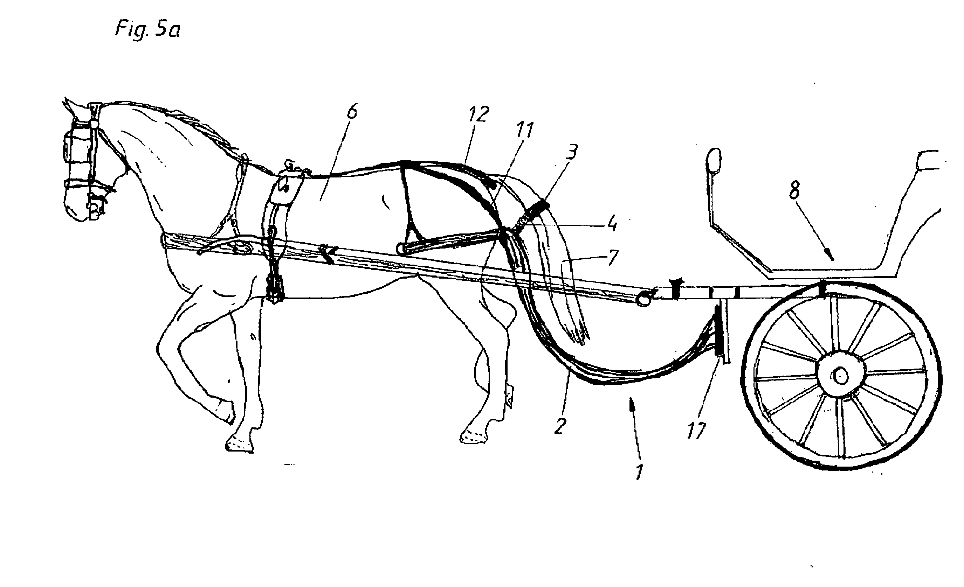

Fig. 5a zeigt einen Ausschnitt eines Fuhrwerks, bestehend aus einem Zugtier 6, das einen Wagen 8 mittels eines im Stand der Technik bekannten Vordergeschirrs und einer Zugvorrichtung zieht. Eine Auffangvorrichtung 1 ist mit einer ersten Befestigungseinrichtung an einem Riemensystem 11, 12 mit dem Zugtier 6 verbunden. Das Betätigungselement 3 ist am Schweif 7 befestigt und wirkt über das Verbindungselement 4 auf die Öffnung 14 des Auffangsackes 2. Das andere Ende des Auffangsackes 2 ist am Wagen 8 befestigt, wozu in diesem Fall eine Halteplatte 17 verwendet wird.

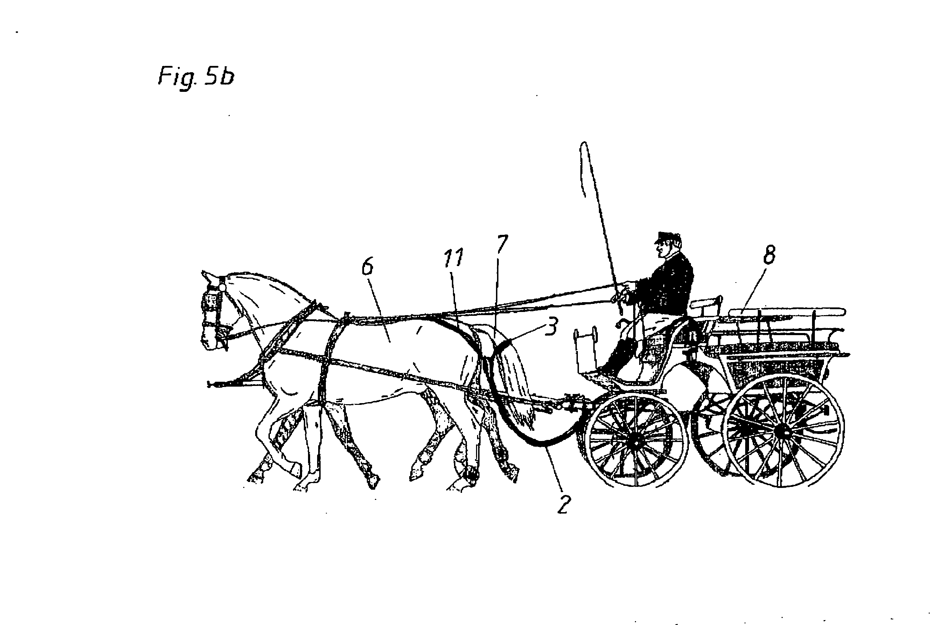

Fig. 5b zeigt eine weitere Darstellung eines Fuhrwerks mit einem Zugtier 6 und einem Wagen 8 und einer erfindungsgemäßen Auffangvorrichtung 1.

## Patentansprüche

1. Auffangvorrichtung (1) für tierische Exkremente zur Verwendung bei einem Fuhrwerk, wobei das Fuhrwerk ein Zugtier (6) mit einem Schweif (7) und einem vom Zugtier (6) bewegten Wagen (8) oder Schlitten aufweist und wobei die Auffangvorrichtung (1) ein am Schweif (7) zu befestigendes Betätigungselement (3) aufweist, mittels welchem durch ein Anheben des Schweifes (7) während des Kotens bzw. Urinierens das Innere der Auffangvorrichtung (1) für die Exkremente zugänglich machbar ist, **dadurch gekennzeichnet, dass** die Auffangvorrichtung (1) eine erste Befestigungseinrichtung und eine zweite Befestigungseinrichtung aufweist, wobei die Auffangvorrichtung (1) mit der ersten Befestigungseinrichtung am Zugtier (6) und mit der zweiten Befestigungseinrichtung am Wagen (8) oder Schlitten befestigbar ist.

2. Auffangvorrichtung nach Anspruch 1, **dadurch gekennzeichnet, dass** das Betätigungselement (3) als ein um den Schweif (7) anzuordnendes Band ausgebildet ist.

3. Auffangvorrichtung nach Anspruch 1 oder 2, **dadurch gekennzeichnet, dass** die erste Befestigungseinrichtung über ein Befestigungsmittel verfügt, mit dem die Auffangvorrichtung (1) mit einem Geschirr oder einer Mehrzahl an Riemen (11, 12) verbindbar ist, wobei das Geschirr oder die Mehrzahl an Riemen (11, 12) vorzugsweise am Hinterteil des Zugtieres (6) befestigbar ist oder sind.

4. Auffangvorrichtung nach einem der Ansprüche 1 bis 3, **dadurch gekennzeichnet, dass** die zweite Befestigungseinrichtung (10) einen Halteteil aufweist, der an einem am Wagen (8) oder Schlitten montierten Tragteil befestigbar ist.

5. Auffangvorrichtung nach Anspruch 4, **dadurch gekennzeichnet, dass** der Halte- und der Tragteil derart ausgebildet sind, dass im befestigten Zustand der Halteteil mit dem Tragteil formschlüssig verbunden ist.

6. Auffangvorrichtung nach Anspruch 4, **dadurch gekennzeichnet, dass** der Halteteil wenigstens einen Karabiner (13) umfasst.

7. Auffangvorrichtung nach einem der Ansprüche 1 bis 6, **dadurch gekennzeichnet, dass** das Befestigungsmittel der ersten Befestigungsvorrichtung wenigstens einen Karabiner (13a, 13b) umfasst.

8. Auffangvorrichtung nach einem der Ansprüche 1 bis 7, **dadurch gekennzeichnet, dass** die Auffangvorrichtung (1) einen Auffangsack (2) aufweist, wobei der Auffangsack (2) eine Öffnung (14) umfasst, die im Montagezustand dem Hinterteil des Zugtiers (6) zugewandt ist.

9. Auffangvorrichtung nach Anspruch 8, **dadurch gekennzeichnet, dass** der Auffangsack (2) eine weitere Öffnung (18) umfasst, die im Montagezustand dem Wagen (8) oder Schlitten zugewandt ist.

10. Auffangvorrichtung nach Anspruch 8 oder 9, **dadurch gekennzeichnet, dass** der Auffangsack (2) aus einem flexiblen und/oder elastischen Material besteht.

11. Auffangvorrichtung nach einem der Ansprüche 8 bis 10, **dadurch gekennzeichnet, dass** der Auffangsack (2) aus Kunststoff oder Leder besteht.

12. Auffangvorrichtung nach einem der Ansprüche 8 bis 11, **dadurch gekennzeichnet, dass** sich im zumindest teilweise mit Exkrementen befüllten Auffangsack (2) im Montagezustand der Auffangvorrichtung (1) eine erste Faltung zwischen dem Zugtier (6) und dem mit Exkrementen befüllten Bereich des Auffangsacks (2) bildet.

13. Auffangvorrichtung nach einem der Ansprüche 8 bis 12, **dadurch gekennzeichnet, dass** sich im zumindest teilweise mit Exkrementen befüllten Auffangsack (2) im Montagezustand der Auffangvorrichtung (1) eine zweite Faltung zwischen dem Wagen (8) oder Schlitten und dem mit Exkrementen befüllten Bereich des Auffangsacks (2) bildet.

14. Auffangvorrichtung nach einem der Ansprüche 1 bis 13, **dadurch gekennzeichnet, dass** die Auffangvorrichtung (1), vorzugsweise der Auffangsack (2), einen aus einem flexiblen und/oder elastischen Material bestehenden Lappen (5) aufweist, der mit dem Betätigungselement (3) verbunden ist, wobei der Lappen (5) im gesenkten Zustand des Schweifes (7) eine Öffnung (14) in der Auffangvorrichtung (1) zumindest teilweise verschließt.

15. Auffangvorrichtung nach einem der Ansprüche 1 bis 14, **dadurch gekennzeichnet, dass** die Auffangvorrichtung (1) einen Anschluss zum Anschließen eines Wasserschlauchs aufweist.
